# EUROPÄISCHE PATENTSCHRIFT

(11) **EP 3 294 594 B1**
(45) Veröffentlichungstag und Bekanntmachung des Hinweises auf die Patenterteilung: **21.10.2020**
(21) Anmeldenummer: 16723709.8
(22) Anmeldetag: 11.05.2016
(51) Int. Cl.: B60R 25/24

(54) **ZUGANGS- UND FAHRBERECHTIGUNGSSYSTEM MIT ERHÖHTER SICHERHEIT GEGEN RELAISANGRIFFE AUF DIE TRANSPONDINGSCHNITTSTELLE**
ACCESS AND DRIVING AUTHORIZATION SYSTEM WITH IMPROVED SECURITY AGAINST RELAY ATTACKS DIRECTED TO THE TRANSPONDER INTERFACE
SYSTÈME D'AUTORISATION D'ACCÈS ET DE CONDUITE À SÉCURITÉ ACCRUE CONTRE DES ATTAQUES EN RELAIS CONTRE L'INTERFACE DE TRANSPONDEUR

(30) Priorität: 15.05.2015 DE 102015107640
(43) Veröffentlichungstag der Anmeldung: 21.03.2018
(73) Patentinhaber: HELLA GmbH & Co. KGaA, 59552 Lippstadt (DE)
(72) Erfinder: WEGHAUS, Ludger, 59556 Lippstadt (DE)
(86) Internationale Anmeldenummer: PCT/EP2016/060547
(87) Internationale Veröffentlichungsnummer: WO 2016/184747

(56) Entgegenhaltungen:
- EP-A1- 2 719 584
- EP-A1- 2 719 585
- WO-A1-2012/022802

## Beschreibung

Die Erfindung betrifft ein Authentifikationselement, insbesondere Keyless-Go-Mittel für ein Fahrzeug, und ein Berechtigungssystem für Fahrzeuge mit mindestens einem Authentifikationselement. Ferner betrifft die Erfindung ein Verfahren zur Überprüfung einer von einem Nutzer beabsichtigten Autorisierungsanfrage an einem Authentifikationselement eines Fahrzeuges mit einem Berechtigungssystem.

Bekannte Berechtigungssysteme für Fahrzeuge, wie z. B. sog. passive schlüssellose Systeme oder sog. hands-free entry/go Systeme bzw. Keyless Entry Systeme, erfordern es nicht, ein Berechtigungsmittel bzw. einen Schlüssel in die Hand zu nehmen, um bestimmte Aktionen auszulösen.

So ist es mit derartigen Systemen beispielsweise möglich, ein Fahrzeug ohne aktive Benutzung eines Berechtigungsmittels bzw. Autoschlüssels zu entriegeln und durch das bloße Betätigen eines Startknopfes zu starten. Ermöglicht wird dies durch das Berechtigungsmittel bzw. einen Keyless-Entry-Schlüssel mit einem Chip, den der Nutzer mit sich führt.

Bei Systemen aus dem Stand der Technik sendet das Fahrzeug ein schwaches Signal mit einer Reichweite von wenigen Metern, das das Berechtigungsmittel empfängt. Das Berechtigungsmittel sendet daraufhin ein Signal an das Fahrzeug, das das Fahrzeug dazu benutzt, zu entscheiden, ob es sich um ein autorisiertes Berechtigungsmittel handelt und ob darauf basierend Zugangs- bzw. Fahrberechtigungsbefehle umgesetzt werden können.

Solche Berechtigungssysteme setzen also keine bewusste Nutzerinteraktion am Berechtigungsmittel mehr voraus, sondern überprüfen nur, ob das Berechtigungsmittel in den Momenten, in denen eine Überprüfung der Autorisierung erfolgen soll, in unmittelbarer Nähe zum Auto - im Falle des Zuganges - bzw. im Auto - im Falle einer Fahrberechtigung - ist.

Im Kontext dieser Berechtigungs- bzw. Keyless Entry Systeme rücken Angriffsszenarien, die eben auf spezielle Eigenschaften der damit verbundenen Technologien zurückgreifen, in den Vordergrund.

So sind mittlerweile Angriffsszenarien bekannt, bei denen die zugehörige Funkstrecke des Berechtigungssystems bzw. die Funkstrecke zwischen Schlüssel und Fahrzeug verlängert wird. Hierbei handelt es sich um sog. Relaisangriffe bzw. relay station attacks (RSA).

Bei einem derartigen Relaisangriff wird das Signal des Fahrzeugs zum Berechtigungsmittel mittels eines Antennenpaares weitergeleitet bzw. verlängert. Dabei muss eine Antenne/eine Relaisstation nah (typsicherweise weniger als 2 Meter) am Fahrzeug sein und die andere Antenne/Relaisstation nah an dem autorisierten Berechtigungsmittel (typischerweise weniger als 2 Meter). Die Distanz zwischen den beiden Relaisstationen (Funkstreckenverlängerungsstationen) kann dabei sehr groß sein und ist lediglich abhängig von der konkreten Implementierung der Relaisstationen, deren Ziel typischerweise krimineller Natur ist und bei denen man auch nicht davon ausgehen kann, dass regulatorische Bestimmungen einschränkend wirken.

Folglich kann das Fahrzeug mittels eines Relaisangriffs geöffnet bzw. gestartet werden, obwohl sich das zugehörige Berechtigungsmittel außerhalb der üblichen Distanz für eine Öffnung bzw. Fahrberechtigung des Fahrzeugs befindet.

Es gibt sehr unterschiedliche technologische Ansätze, die eine RSA auf Keyless Entry Systeme erschweren oder gar unmöglich machen. Bislang wurde bei diesen Betrachtungen aber auf die hands-free Funktion abgestellt und nicht berücksichtigt, dass es neben der eigentlichen komfortgetriebenen hands-free Funktion gerade für die Funktion Fahrberechtigung eine Rückfalllösung ("Notstart") gibt. Diese soll sicherstellen, dass, wenn ein Berechtigungsmittel z. B. eine schwache/leere bzw. defekte Energieversorgung oder teilweise sogar weitere/andere Defekt aufweist, ein Starten eines Fahrzeuges dennoch möglich ist.

Diese Rückfalllösung ist typischerweise derart implementiert, dass man das Berechtigungsmittel an eine bestimmte Position innerhalb oder außerhalb des Fahrzeuges hält, an dem eine fahrzeugseitige RFID Transponderlesespule angeordnet ist.

Mit deren Hilfe wird das Berechtigungsmittel mit Energie versorgt und zwar über eine transformatorische Kopplung, sodass eine sog. challenge/response Kommunikation zwischen Fahrzeug und Berechtigungsmittel durchgeführt werden kann, mittels welcher überprüft wird, ob das Berechtigungsmittel für das Fahrzeug autorisiert ist.

Diese Notfunktion, also das Versorgen des Berechtigungsmittels mit Energie und eine Kommunikation zur Authentifizierung zwischen Berechtigungsmittel und Fahrzeug, wird auch Transponding genannt. Für Keyless Entry Systeme handelt es sich dabei also um eine Rückfalllösung bzw. den sogenannten Notstart.

Folglich existiert neben der eigentlichen Keyless Entry bzw. hands-free Funktion ein zweiter, paralleler Pfad, um Fahrberechtigung erlangen zu können. Dieser zweite Pfad gewährleistet eine Notstart-Funktionalität, die den Zweck hat, die Verfügbarkeit für z. B. die Funktion Fahrberechtigung sicherzustellen. Folglich ist es mittels genannter Notstart-Funktionalität beispielsweise möglich, mittels einer RSA Zugang zu einem Fahrzeug zu erlangen und dieses zu starten.

Der Erfindung liegt daher die Aufgabe zu Grunde, ein Authentifikationselement und ein Berechtigungssystem für Fahrzeuge anzugeben, bei denen mit geringem technischem Aufwand und auf einfache Weise eine Relaisattacke auf die Notstart-Funktion eines Fahrzeuges unterbunden werden kann.

Ferner liegt der Erfindung die Aufgabe zugrunde, ein Verfahren zur Überprüfung einer von einem Nutzer beabsichtigten Autorisierungsanfrage an einem Authentifikationselement eines Fahrzeuges mit einem Berechtigungssystem anzugeben, bei dem auf einfache Weise eine Relaisattacke auf die Notstart-Funktion eines Fahrzeuges unterbunden werden kann und welches idealerweise simpel aufgebaut ist, um einfach in bestehende Systeme integriert zu werden.

Beide Aufgaben werden erfindungsgemäß insbesondere durch die Merkmale der unabhängigen Patentansprüche gelöst. Weitere vorteilhafte Weiterbildungen der vorliegenden Erfindung sind Gegenstand der Unteransprüche.

Bei einem ersten Aspekt der Erfindung ist es vorgesehen, dass ein Authentifikationselement, insbesondere ein Schlüssel oder ein Keyless-Go-Mittel für ein Fahrzeug, beispielsweise für ein Automobil, nachstehende Merkmale aufweist.

Dabei umfasst das Authentifikationselement eine Transpondingschnittstelle zum Übermitteln eines Authentifikationssignals und zum Empfangen von Energie und Daten. Somit ist es möglich, eine Funkverbindung aufzubauen und über diese nicht nur Authentifikationssignale zu versenden bzw. zu übermitteln, sondern auch Energie und Daten für das Authentifikationselement zu empfangen.

Ferner weist das Authentifikationselement eine Tastereinrichtung zum Erfassen einer Nutzereingabe auf. Mittels der Tastereinrichtung kann auf einfache Weise eine aktive Bedienung des Authentifikationselements erfasst werden, wodurch z. B. ein Angriff auf die Notstart-Funktion unterbunden werden kann.

Des Weiteren ist das Authentifikationselement so ausgebildet, dass Authentifikationssignale über die Transpondingschnittstelle übermittelt werden, wenn die Tastereinrichtung eine Nutzereingabe erfasst. Auf diese Weise wird also dann ein Authentifikationssignal von dem Authentifikationselement übermittelt, wenn eine Nutzereingabe am Authentifikationselement erfolgt.

Vorzugsweise ist das Authentifikationselement so ausgebildet ist, dass Authentifikationssignale nur dann über die Transpondingschnittstelle übermittelt werden, wenn die Tastereinrichtung eine Nutzereingabe erfasst. Diese Ausgestaltung erlaubt es dem das Authentifikationselement nur dann Authentifikationssignale zu versenden bzw. zu übermitteln, wenn eine erfasste Nutzereingabe vorliegt. Andernfalls ist es auch möglich, dass stets nach Erhalt von Energie über die Transpondingschnittstelle Authentifikationssignale übermittelt werden.

Auch ist es von Vorteil, wenn das Authentifikationselement eine Signalverarbeitungs-und -weiterleitungseinrichtung aufweist, die vorzugsweise mit der Transpondingschnittstelle und mit der Tastereinrichtung verbunden ist. Dies erlaubt es der Signalverarbeitungs- und -weiterleitungseinrichtung mit der Transpondingschnittstelle und der Tastereinrichtung zu kommunizieren bzw. deren Signale/Daten zu erfassen und vorzugsweise auszuwerten bzw. zu vergleichen.

Ferner ist es günstig, wenn im Authentifikationselement, insbesondere in der Signalverarbeitungs- und -weiterleitungseinrichtung, ein vorbestimmter Referenzwert zum Vergleichen hinterlegt ist. Dadurch kann z. B. die Signalverarbeitungs- und - weiterleitungseinrichtung durch Vergleich Entscheidungen treffen, von denen vorzugsweise das Übermitteln von Authentifikationssignalen abhängig ist. Der vorbestimmbare Referenzwert kann dabei vorzugsweise von einer Programmiereinrichtung auf frei festlegbare Werte für z. B. eine Dauer des Betätigens der Tastereinrichtung eingestellt werden.

Bevorzugterweise erfasst die Signalverarbeitungs- und -weiterleitungseinrichtung die Nutzereingabe der Tastereinrichtung. Dadurch ist die Signalverarbeitungs- und - weiterleitungseinrichtung in der Lage, schnell und effektiv eine erfasste Nutzeringabe mit z. B. einem Referenzwert zu vergleichen.

Des Weiteren ist es bevorzugt, wenn die Signalverarbeitungs- und - weiterleitungseinrichtung Authentifikationssignale über die Transpondingschnittstelle übermittelt. Somit kann die Signalverarbeitungs- und -weiterleitungseinrichtung das Übermitteln von Authentifikationssignalen steuern und initiieren.

Auch ist es günstig, wenn die Authentifikationssignale eine an der Tastereinrichtung erfasste Nutzereingabe umfassen. Auf diese Weise kann das Authentifikationselement Authentifikationssignale mit Informationen über die Tastereinrichtung übermitteln. Dadurch wird ein spezieller Status des Authentifikationselements auf eine weitere Vorrichtung übertragbar, die diese Daten bzw. Signale auswerten kann, um beispielsweise eine Funktion, wie das Starten eines Fahrzeuges, auszuführen oder zu gestatten. Vorteilhafterweise weist die Tastereinrichtung zum Erfassen einer Nutzereingabe ein Bedienelement auf. Dieses kann günstigerweise durch Drücken betätigt werden, wobei es bevorzugterweise danach in eine Ausgangslage zurückkehrt. Somit wird also ein einfacher Schalter zur Verfügung gestellt, mit dessen Hilfe ein gewünschtes Ausführen einer Notstart-Funktion realisierbar ist.

Des Weiteren ist es bevorzugt, dass die Signalverarbeitungs- und - weiterleitungseinrichtung so ausgebildet ist, dass die erfasste Nutzereingabe mit dem Referenzwert, insbesondere dem vorbestimmbaren Referenzwert, verglichen wird. Dies erlaubt es der Signalverarbeitungs- und -weiterleitungseinrichtung in Abhängigkeit des Vergleiches bzw. der Werte eine Entscheidung, wie z. B. das Versenden von Authentifikationssignalen, zu treffen.

Ferner ist es bevorzugt, dass bei einem positiven Vergleich die Signalverarbeitungs-und -weiterleitungseinrichtung Authentifikationssignale über die Transpondingschnittstelle übermittelt. Somit können nun Authentifikationssignale von dem Authentifikationselement übermittelt bzw. versendet werden, um z. B. ein Fahrzeug erfolgreich zu starten.

Bei einem zweiten Aspekt der Erfindung ist es vorgesehen, ein Berechtigungssystem für Fahrzeuge mit mindestens einem Authentifikationselement und mit einer Vorrichtung anzugeben.

Es wird ausdrücklich darauf hingewiesen, dass die Merkmale des Authentifikationselements, wie sie unter dem ersten Aspekt der Erfindung erwähnt wurden, einzeln oder miteinander kombinierbar bei dem Berechtigungssystem für Fahrzeuge Anwendung finden können.

Anders ausgedrückt, die oben unter dem ersten Aspekt der Erfindung genannten Merkmale betreffend das Authentifikationselement können auch hier unter dem zweiten Aspekt der Erfindung mit weiteren Merkmalen kombiniert werden.

Das Berechtigungssystems weist eine Leseeinrichtung zum Senden von Energie und Daten sowie zum Empfangen von Authentifikationssignalen auf. Die Leseeinrichtung erlaubt es eine Funkverbindung aufzubauen, wobei über diese nicht nur Daten und Energie versendet werden, sondern auch Authentifikationssignale erhalten werden können.

Dabei ist es von Vorteil, wenn die Vorrichtung fahrzeugseitig, insbesondere in oder an einem Automobil, angeordnet ist. Somit ist die Vorrichtung mit dem Fahrzeug verbunden und kann beispielsweise eingesetzt werden, dieses zu öffnen und/oder zu starten.

Erfindungsgemäß ist die Transpondingschnittstelle des Authentifikationselements an der Leseeinrichtung der Vorrichtung anordenbar, um ein Authentifikationssignal nach dem Empfang von Energie und Daten an die Leseeinrichtung zu übermitteln. Somit ist ein energieloses Authentifikationselement von extern mit Energie versorgbar und kann seine Tätigkeiten wieder aufnehmen.

Auch ist es von Vorteil, wenn die Vorrichtung so ausgebildet ist, dass nach Empfang von übermittelten Authentifikationssignalen eine Funktion aktiviert wird, insbesondere eine Fahrberechtigung erteilt wird. Vorteilhafterweise werden die Authentifikationssignale von dem Authentifikationselement übermittelt. Somit kann durch bloßes Empfangen von Authentifikationssignalen eine Fahrberechtigung erteilt werden. Dies ist insbesondere dann von Vorteil, wenn das Authentifikationselement so ausgebildet ist, dass dieses unter bestimmten Bedingungen Authentifikationssignale versendet bzw. übermittelt, wie dies beispielsweise unter dem ersten Aspekt beschrieben ist.

Auch ist es günstig, wenn das Authentifikationselement ausgebildet ist, Authentifikationssignale über die Transpondingschnittstelle zu übermitteln, die die Nutzereingabe der Tastereinrichtung umfassen. Dabei ist es von Vorteil, wenn die Vorrichtung vorzugsweise ausgebildet ist, die von dem Authentifikationselement übermittelten Authentifikationssignale mit hinterlegten Authentifikationssignalen zu vergleichen. Auf diese Weise kann die Vorrichtung eine Entscheidung auf Basis des Vergleiches treffen und beispielsweise bei positivem Vergleich eine Funktion, wie z. B. eine Fahrberechtigung für ein Fahrzeug, aktivieren. Somit trifft also im Gegensatz zur bereits vorgestellten Lösung die Vorrichtung die Entscheidung eine Funktion zu aktivieren bzw. eine Aktion durchzuführen und nicht das Authentifikationselement. Jedoch beruht die Entscheidung bei beiden Varianten auf der Auswertung der Nutzereingabe der Tastereinrichtung.

Des Weiteren ist es bevorzugt, dass die Vorrichtung eine Steuerungseinrichtung, insbesondere eine Funktionslogik zur Verarbeitung von Authentifikationssignalen aufweist, die vorzugsweise mit der Leseeinrichtung verbunden ist. Auf diese Weise wird es der Steuerungseinrichtung bzw. der Funktionslogik ermöglicht, die Leseeinrichtung zu steuern und anzuweisen. Ferner können somit die Aufgaben der Steuerungseinrichtung auf einzelne Teilelemente verteilt werden, die auf die jeweilige Aufgabe spezialisiert sind. Dadurch ist es möglich, einzelne Steuerungsaufgaben der Steuerungseinrichtung schneller und effektiver handzuhaben.

Ferner ist es von Vorteil, wenn in der Vorrichtung, insbesondere in der Funktionslogik, hinterlegte Authentifikationssignale zum Vergleichen hinterlegt sind. Dadurch können die in der Vorrichtung hinterlegten mit weiteren Authentifikationssignalen auf einfache Weise und schnell mithilfe der Funktionslogik verglichen werden.

Des Weiteren ist es bevorzugt, wenn die empfangenen bzw. übermittelten und hinterlegten Authentifikationssignale eine von der Tastereinrichtung erfasste Nutzereingabe umfassen. Auch ist es günstig, wenn die Funktionslogik empfangene Authentifikationssignale mit hinterlegten Authentifikationssignalen vergleicht. Auf diese Weise können hinterlegte Signale mit den im Authentifikationselement erfassten bzw. übermittelten verglichen werden, wodurch in Abhängigkeit der Nutzereingabe, wie z. B. das Drücken bzw. Betätigen eines Bedienelementes, beispielsweise Funktionen, wie das Erteilen einer Fahrberechtigung, freigegeben oder gesperrt werden können.

Bei einem dritten Aspekt der Erfindung ist es vorgesehen, ein Verfahren zur Überprüfung einer von einem Nutzer beabsichtigten Autorisierungsanfrage an einem Authentifikationselement eines Fahrzeuges mit einem Berechtigungssystem anzugeben, wobei das Berechtigungssystem mindestens ein Authentifikationselement und eine Vorrichtung umfasst.

Es wird ausdrücklich darauf hingewiesen, dass die Merkmale des Berechtigungssystem und insbesondere des Authentifikationselements, wie sie unter dem ersten und zweiten Aspekt der Erfindung erwähnt werden, einzeln oder miteinander kombinierbar bei dem Verfahren zur Überprüfung Anwendung finden können.

Anders ausgedrückt, die oben unter dem ersten und zweiten Aspekt der Erfindung genannten Merkmale betreffend das Berechtigungssystem und das Authentifikationselement können auch hier unter dem dritten Aspekt der Erfindung mit weiteren Merkmalen kombiniert werden.

Das Verfahren umfasst nachstehende Schritte:
Ein Schritt weist ein Anordnen des Authentifikationselements im Sende-und/oder Empfangsbereich der Leseeinrichtung der Vorrichtung auf. Somit kann das Authentifikationselement am Ort der Energieaufnahme platziert werden.

Ein weiterer Schritt weist ein Empfangen von Energie auf, wobei die Transpondingschnittstelle des Authentifikationselements Energie von der Leseeinrichtung der Vorrichtung empfängt. Dadurch kann das Authentifikationselement schnurlos mit Energie versorgt werden.

Ein weiterer Schritt weist ein Erfassen der Nutzereingabe am Authentifikationselement durch die Tastereinrichtung auf. In diesem Schritt wird vereinfacht ausgedrückt das Betätigen einer Taste bzw. Drücken eines Bedienelementes am Authentifikationselement erfasst bzw. gemessen und dies als Messwert zur Verfügung gestellt.

Ein weiterer Schritt weist ein Erzeugen von Authentifikationssignalen aut, welche die erfasste Nutzereingabe umfassen. Somit ist die erfasste Nutzereingabe in Authentifikationssignale umgewandelbar, wodurch ein einfaches Übermitteln ermöglicht wird.

Ein weiterer Schritt weist ein Übermitteln der Authentifikationssignale von dem Authentifikationselement an die Vorrichtung auf. Dadurch gelangen die erfassten Authentifikationssignale zur Vorrichtung.

Ein weiterer Schritt weist ein Vergleichen der erfassten bzw. übermittelten Authentifikationssignale mit hinterlegten Authentifikationssignalen auf. Mithilfe des Vergleichs kann eine Entscheidung durch das Verfahren bzw. durch die das Verfahren ausführende Vorrichtung getroffen werden, ob eine Funktion, insbesondere eine Fahrberechtigung, erlaubt werden kann oder verwehrt bleibt.

Bei nachfolgendem Schritt Vergleichen ist es von Vorteil, wenn dieser alternativ zu den Schritten Erfassen, Übermitteln und Vergleichen ausgeführt wird.

Der bevorzugte alternative Schritt weist im Authentifikationselement ein Vergleichen der erfassten Nutzereingabe mit einem Referenzwert auf, wobei bei einem positiven Vergleich ein Übermitteln von Authentifikationssignalen von dem Authentifikationselement an die Vorrichtung initiiert wird. Auf diese Weise wird also nach einem erfolgreichen Vergleich der erfassten Nutzereingabe mit einem Referenzwert eine Entscheidung getroffen, die - falls positiv - zur Übermittlung bzw. zum Übermitteln von Authentifikationssignalen führt.

Des Weiteren ist es von Vorteil, wenn das Erfassen der Nutzereingabe ein Erfassen durch die Signalverarbeitungs- und -weiterleitungseinrichtung des Authentifikationselements umfasst. Dadurch ist die Signalverarbeitungs- und - weiterleitungseinrichtung in der Lage die Schritte Vergleichen und Erfassen durchzuführen, wodurch beide Schritte auf einfache und effektive Weise realisierbar sind.

Auch ist es günstig, wenn das Erfassen der Nutzereingabe ein Erfassen eines Drückens eines Bedienelements der Tastereinrichtung umfasst. Somit kann einfach die Nutzereingabe erfasst werden.

Bevorzugterweise ist der Referenzwert in der Signalverarbeitungs- und - weiterleitungseinrichtung des Authentifikationselements hinterlegt. Auf diese Weise ist es dem Authentifikationselement möglich, aus einem Vergleich eine Entscheidung für das weitere Verfahren treffen zu können.

Ferner ist es bevorzugt, dass die hinterlegten Authentifikationssignale in der Funktionslogik der Vorrichtung hinterlegt sind. Auf diese Weise kann die Effektivität der Vorrichtung weiter gesteigert werden, um ein Vergleichen und Erfassen schnell und effizient durchzuführen.

Auch ist es bevorzugt, dass bei einem positiven Vergleich die erfassten Authentifikationssignale mit den hinterlegten Authentifikationssignalen übereinstimmen. Auch hier ist es der Funktionslogik auf einfache Weise möglich, Authentifikationssignale auf Echtheit zu prüfen.

Es wird darauf hingewiesen, dass "übereinstimmen" der Authentifikationssignale in dem Sinne zu verstehen ist, dass die Vorrichtung bzw. die Funktionslogik der Steuerungseinrichtung unter anderem aus dem übermittelten Authentifikationssignalen erkennt, dass eine Nutzereingabe am Authentifikationselement tatsächlich stattfindet oder innerhalb eines kleinen bestimmbaren Zeitraumes stattgefunden hat.

Ferner ist es bevorzugt, dass die Funktionslogik die Authentifikationssignale des Authentifikationselements mit den hinterlegten Authentifikationssignalen der Vorrichtung vergleicht. Somit kann auf einfache Weise eine Verifikation der Authentifikationssignale in der Vorrichtung vorgenommen werden, wodurch in logischer Konsequenz auch die Vorrichtung in der Lage ist, eine Entscheidung bzw. eine Verifikation der Signale vorzunehmen.

Des Weiteren ist es günstig, wenn bei einem positiven Vergleich die erfasste Nutzereingabe unterhalb oder oberhalb des Referenzwertes liegt oder dem Referenzwert entspricht. Durch den Referenzwert als Bezugspunkt kann die Signalverarbeitungs- und -weiterleitungseinrichtung diese Entscheidung einfach und sicher treffen.

Des Weiteren ist es günstig, wenn die Signalverarbeitungs- und - weiterleitungseinrichtung die erfasste Nutzereingabe mit dem hinterlegten Referenzwert vergleicht. Dies erlaubt es dem Authentifikationselement zu entscheiden, ob Authentifikationssignale übermittelt werden, um somit eine Überprüfung einer von einem Nutzer beabsichtigten Autorisierungsanfrage an einem Authentifikationselement eines Fahrzeuges abzuschließen.

Auch ist es bevorzugt, wenn die Signalverarbeitungs- und -weiterleitungseinrichtung über eine Funkverbindung von Transpondingschnittstelle und Leseeinrichtung Authentifikationssignale an die Funktionslogik der Vorrichtung übermittelt. Auf diese Weise kann die Vorrichtung die Überprüfung einer von einem Nutzer beabsichtigten Autorisierungsanfrage an einem Authentifikationselement eines Fahrzeuges erkennen und diese erfolgreich zum Abschluß bringen oder eben nicht.

Vorteilhafterweise umfasst der Schritt des Übermittelns der Authentifikationssignale eine Verschlüsselung und/oder Komprimierung der Authentifikationssignale. Somit ist ein weiterer Schutzmechanismus gegen Manipulation in das erfindungsgemäße Verfahren implementierbar.

Das zuvor vorgestellt Verfahren sowie das Authentifikationselement und das Berechtigungssystem beschäftigten sich insbesondere mit dem Schutz einer sog. Notstart-Funktion eines Fahrzeuges. Die Notstart-Funktion ist in Fahrzeugen mit Keyless-Entry Systemen zu finden.

Hier wird in dem Fall, dass einem Authentifikationselement bzw. einem Keyless-Entry Schlüssel keine Energie zum Senden und Empfangen von Signalen hat, die sog. Notstart-Funktion zur Verfügung gestellt, bei welcher das Authentifikationselement über einen Transpondingvorgang, wie z. B. bei einem RFID Chip, mit Energie versorgt wird.

Da das Fahrzeug bzw. dessen Steuerung nicht zwischen einem tatsächlichen Notstart, bei dem z. B. die Batterie des Authentifikationselements, leer ist, und einem Angriff auf die Notstart-Funktion unterscheiden kann, würde das Fahrzeug mit einem Berechtigungssystem aus dem Stand starten und somit eine Fahrberechtigung erteilen.

Hingegen zielt die vorgestellte Erfindung darauf ab, Angriffe auf die Notstart-Funktion zu unterbinden und eventuelle Notstart-Szenarien zu erkennen, um nur dem Besitzer eines Fahrzeuges eine Fahrberechtigung erteilen zu können,

Nachstehend wird die Erfindung anhand von Ausführungsbeispielen in Verbindung mit zugehörigen Zeichnungen näher erläutert. Diese zeigen schematisch:
- **Fig. 1**: ein Berechtigungssystem mit einem Authentifikationselement und mit einer Vorrichtung; und
- **Fig. 2**: ein Verfahren zur Überprüfung einer von einem Nutzer beabsichtigten Autorisierungsanfrage an einem Authentifikationselement.

In nachfolgender Beschreibung werden gleiche Bezugszeichen für gleiche Gegenstände verwendet.

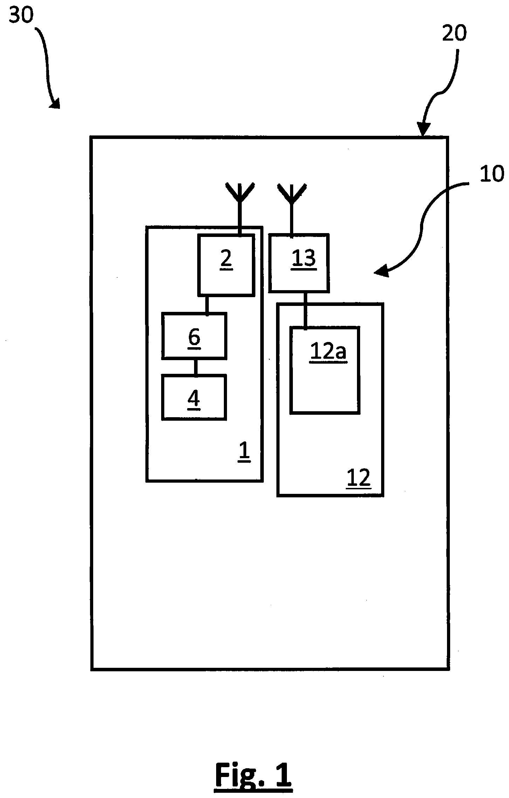

Fig. 1 zeigt ein Berechtigungssystem 30 für ein Fahrzeug 20, das ein Authentifikationselement 1 und eine Vorrichtung 10 aufweist.

Das Authentifikationselement 1 ist im vorliegenden Beispiel als Schlüssel oder Keyless-Go-Mittel für das Fahrzeug 20 ausgestaltet und weist eine Transpondingschnittstelle 2 zum Senden/Übermitteln von Authentifikationssignalen und zum Empfangen von Energie und Daten auf. Die auf der Transpondingschnittstelle 2 dargestellte Antenne stellt das Senden/Empfangen lediglich bildlich dar.

Des Weiteren hat das Authentifikationselement 1 eine Signalverarbeitungs- und - weiterleitungseinrichtung 6. Diese ist sowohl mit der Transpondingschnittstelle 2 als auch mit einer Tastereinrichtung 4 zum Erfassen einer Nutzereingabe eines Nutzers am Authentifikationselement 1 verbunden.

Die Tastereinrichtung 4 weist zum Erfassen einer Nutzereingabe ein nicht dargestelltes Bedienelement, beispielsweise einen Knopf, auf. Dieser wird durch Drücken betätigt und kehrt danach in seine Ausgangslage zurück, sodass ein erneutes Drücken möglich ist.

In der Signalverarbeitungs- und -weiterleitungseinrichtung 6 des Authentifikationselements 1 ist ein vorbestimmter Referenzwert zum Vergleichen mit einer gemessenen bzw. erfassten Nutzereingabe hinterlegt.

Die Signalverarbeitungs- und -weiterleitungseinrichtung 6 ist ferner so ausgebildet, dass diese die gemessene Nutzereingabe mit dem Referenzwert vergleicht, wobei bei einem positiven Vergleich die Signalverarbeitungs- und -weiterleitungseinrichtung 6 Authentifikationssignale über die Transpondingschnittstelle 2 übermittelt. Hierbei können die Authentifikationssignale eine von der Tastereinrichtung 4 erfasste Nutzereingabe umfassen, wodurch diese beispielsweise zu der Vorrichtung 10 übermittelbar ist.

Vereinfacht dargestellt, ist das Authentifikationselement 1 so ausgebildet ist, dass Authentifikationssignale über die Transpondingschnittstelle 2 übermittelt werden, wenn die Tastereinrichtung 4 eine Nutzereingabe erfasst, die einem vorbestimmbaren Referenzwert entspricht.

Die Vorrichtung 10 des Berechtigungssystems 30 ist fahrzeugseitig, also in dem Fahrzeug 20 angeordnet, und weist eine Leseeinrichtung 13 zum Senden von Energie und Daten sowie zum Empfangen eines Authentifikationssignals auf.

Des Weiteren zeigt Fig. 1, dass die Transpondingschnittstelle 2 des Authentifikationselements 1 an der Leseeinrichtung 13 der Vorrichtung 10 angeordnet ist, um Authentifikationssignale nach dem Empfang von Energie und Daten an die Leseeinrichtung 13 zu übermitteln. Die auf der Leseeinrichtung 13 dargestellte Antenne stellt das Senden/Empfangen lediglich bildlich dar.

Vereinfacht dargestellt, ist die Vorrichtung 10 so ausgebildet ist, dass nach Empfang von übermittelten Authentifikationssignalen von dem Authentifikationselement 1 eine Funktion aktiviert wird, insbesondere eine Fahrberechtigung erteilt wird.

Die Vorrichtung 10 weist dabei eine Steuerungseinrichtung 12 mit einer Funktionslogik 12a zur Verarbeitung von Authentifikationssignalen auf, die mit der Leseeinrichtung 13 verbunden ist.

Zusammengefasst kann also nach Übermitteln von Authentifikationssignalen von dem Authentifikationselement 1 zur Vorrichtung 10 über eine Funkverbindung von Leseeinrichtung 13 und Transpondingschnittstelle 2 die Funktionslogik 12a beispielsweise eine Fahrberechtigung für das Fahrzeug 20 erteilen.

Bei einer alternativen Ausgestaltung ist das Authentifikationselement 1 ausgebildet, Authentifikationssignale über die Transpondingschnittstelle 2 zu übermitteln, die die Nutzereingabe der Tastereinrichtung 4 umfassen.

Ferner ist die Vorrichtung 10 ausgebildet, die von dem Authentifikationselement 1 übermittelten Authentifikationssignale mit hinterlegten Authentifikationssignalen zu vergleichen und bei positivem Vergleich eine Funktion zu aktivieren.

Hierzu sind in der Funktionslogik 12a Authentifikationssignale zum Vergleichen hinterlegt. Somit können also empfangene bzw. übermittelte und hinterlegte Authentifikationssignale verglichen werden. Der Vollständigkeit halber sei explizit erwähnt, dass in dieser Alternative die übermittelten und hinterlegten Authentifikationssignale eine von der Tastereinrichtung 4 erfasste Nutzereingabe umfassen.

Selbstverständlich ist es auch möglich, beide vorgenannten Ausführungen miteinander zu kombinieren.

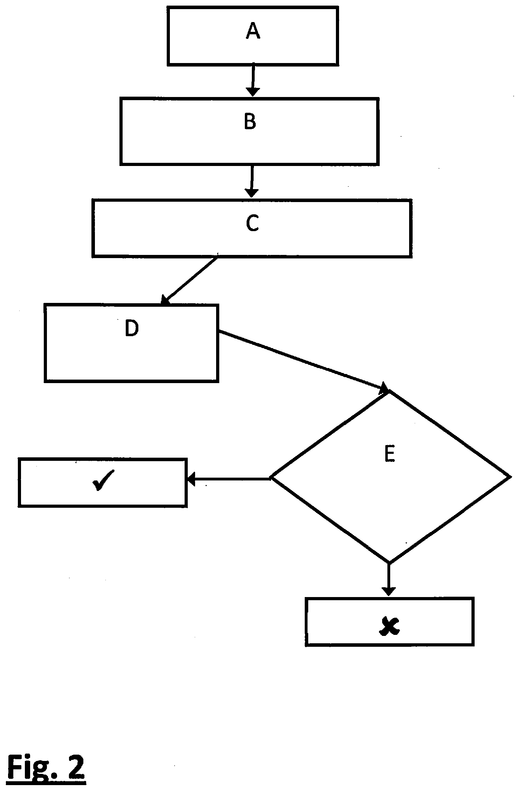

Fig. 2 zeigt ein Verfahren zur Überprüfung einer von einem Nutzer beabsichtigten Autorisierungsanfrage an einem Authentifikationselement 1. Diese Überprüfung findet insbesondere im Rahmen einer sog. Notstart-Funktion statt. Diese ist in Fahrzeugen mit Keyless-Entry Systemen zu finden.

Hier wird in dem Fall, dass einem Authentifikationselement bzw. einem Keyless-Entry Schlüssel keine Energie zum Senden und Empfangen von Signalen hat, die sog. Notstart-Funktion zur Verfügung gestellt, bei welcher das Authentifikationselement über einen Transpondingvorgang, wie z. B. bei einem RFID Chip, mit Energie versorgt wird.

Da das Fahrzeug 20 bzw. dessen Steuerungseinrichtung 12 nicht zwischen einem tatsächlichen Notstart, bei dem z. B. die Batterie des Authentifikationselements 1 leer ist, und einem Angriff auf die Notstart-Funktion unterscheiden kann, würde das Fahrzeug 20 mit einem Berechtigungssystem aus dem Stand der Technik starten und somit eine Fahrberechtigung erteilen. Ein derartiger Angriff wird hier erkannt und vermieden.

Nach dem Anordnen des Authentifikationselements 1 im Sende- und Empfangsbereich der Leseeinrichtung 13 der Vorrichtung 10 in Schritt A, wird in Schritt B Energie empfangen. Hierbei empfängt die Transpondingschnittstelle 2 des Authentifikationselements 1 Energie von der Leseeinrichtung 13 der Vorrichtung 10. Dies geschieht über das sog. Transponding, bei dem Energie von einem zum anderen über z. B. Magnetfelder übertragen wird, ähnlich wie bei einem RFID Chip.

Im Anschluss ist das Authentifikationselement 1 mittels der Signalverarbeitungs- und - weiterleitungseinrichtung 6 in Schritt C in der Lage, eine Nutzereingabe der Tastereinrichtung 4 des Authentifikationselements 1 zu erfassen und Authentifikationssignale zu erzeugen, die die erfasste Nutzereingabe beinhalten.

In Schritt D werden die erzeugten Authentifikationssignale von dem Authentifikationselement 1 an die Vorrichtung 10 übermittelt, um diese erzeugten bzw. erfassten Authentifikationssignale in Schritt E mit hinterlegten Authentifikationssignalen in der Funktionslogik 12a der Vorrichtung 10 zu vergleichen.

Bei einem positiven Vergleich der erfassten Authentifikationssignale mit den hinterlegten Authentifikationssignalen bzw. wenn beide Signale übereinstimmen, wird in Schritt F die Fahrberechtigung erteilt bzw. das Fahrzeug 20 gestartet.

Es wird darauf hingewiesen, dass Übereinstimmen der Authentifikationssignale in dem Sinne zu verstehen ist, dass die Vorrichtung 10 unter anderem erkennt, dass eine Nutzereingabe am Authentifikationselement tatsächlich vorgenommen wird.

In einem alternativen Verfahren sind die Schritte A und B zu obigen Verfahren identisch, wobei sich die nachfolgenden Schritte unterscheiden.

So wird in Schritt C, die Nutzereingabe der Tastereinrichtung 4 des Authentifikationselements 1 durch die Signalverarbeitungs- und -weiterleitungseinrichtung 6 erfasst und mit einem Referenzwert verglichen, wobei bei einem positiven Vergleich ein Übermitteln von Authentifikationssignalen von dem Authentifikationselement 1 an die Vorrichtung 10 initiiert wird.

Der Referenzwert ist in der Signalverarbeitungs- und -weiterleitungseinrichtung 6 des Authentifikationselements 1 hinterlegt, wobei die Signalverarbeitungs- und - weiterleitungseinrichtung 6 die erfasste Nutzereingabe mit dem hinterlegten Referenzwert vergleicht. Ferner liegt ein positiver Vergleich vor, wenn die erfasste Nutzereingabe dem Referenzwert entspricht.

Sobald diese Bedingung gegeben ist, übermittelt die Signalverarbeitungs- und - weiterleitungseinrichtung 6 über eine Funkverbindung von Transpondingschnittstelle 2 und Leseeinrichtung 13 Authentifikationssignale an die Funktionslogik 12a der Vorrichtung 10. Dies erlaubt es eine Fahrberechtigung freizuschalten und das Fahrzeug 20 zu starten.

Während also, vereinfacht dargestellt, im ersten vorgestellten Verfahren die Vorrichtung 10 entscheidet, ob eine Fahrberechtigung erteilt werden kann, geschieht dies im zweiten vorgestellten Verfahren durch das bzw. im Authentifikationselement 1. Im zweiten Fall liegt bereits dann eine Fahrberechtigung vor, wenn das Authentifikationssignal von der Vorrichtung empfangen wird.

Betreffend beide vorgestellten Verfahrens-Varianten kann der Schritt des Übermitteins der Authentifikationssignale eine Verschlüsselung und/oder Komprimierung der Authentifikationssignale umfassen. Dies erhöht die Sicherheit der Übertragung.

Mit anderen Worten kann die Erfindung beispielhaft auch auf nachstehende Art wiedergegeben bzw. kurz zusammengefasst werden.

Ein Nutzer sitzt in einem Cafe in beliebiger Entfernung von seinem Fahrzeug und hat sein Authentifikationselement 1 bzw. seinen Keyless Entry Schlüssel in der Jackentasche oder Laptoptasche.

Im nachfolgenden wird ein Angriff via Funkstreckenverlängerung (RSA) auf die Notstartfunktion des Fahrzeuges bzw. des Authentifikationselements unternommen.

Ein Angreifer hat sich bereits Zugang zum Fahrzeug verschafft und wünscht dieses nun zu starten. Hierzu drückt den Start-Knopf des Fahrzeugs. Da das Fahrzeug kein gültiges Authentifikationselement im Fahrzeug detektiert, wird es dem Angreifer die Möglichkeit anbieten, einen Notstart zu machen, weil die Batterie des Authentifikationselements leer sein könnte.

Hierzu wird fahrzeugseitig ein Transponding initiiert, bei dem der Angreifer bzw. auch der tatsächliche Nutzer sein beispielsweise energieloses Authentifikationselement an eine bestimmte Stelle im Fahrzeug hält bzw. in ein spezielles Ablagefach legt. Durch transformatorische Kopplung wird das Authentifikationselement nun mit Energie versorgt, so dass das Authentifikationselement eine sog. response zu der neben der Energie nun ebenfalls empfangenen sog. challenge berechnen und ans Fahrzeug zurücksenden kann.

Mit einer eigenen Vorrichtung empfängt der Angreifer im Fahrzeug nun die vom Fahrzeug erzeugten Signale (im Wesentlichen die sog. challenge). Über einen beliebigen Kommunikationskanal werden diese Signale zu einem zweiten Angreifer transferiert, der sich in der Nähe des originalen Authentifikationselements befindet - also in genanntem Cafe.

Dieser zweite Angreifer hat eine Vorrichtung bei sich, mit der nun die identischen Signale erzeugt werden, die das Fahrzeug gesendet hat. Das Authentifikationselement empfängt diese Signale und wechselt nun in einen Transpondingmodus/Notstartmodus, weil es nicht erkennen kann, ob es sich hierbei um einen Angriff handelt oder nicht.

In Implementierungen aus dem Stand der Technik würde das Authentifikationselement nun mit der sog. response antworten, die der zweite Angreifer an den Angreifer im Fahrzeug weiterreichen könnte, um die Signale nachzubilden, so dass das Fahrzeug ein gültiges Authentifikationselement erkennt und also eine Fahrberechtigung erteilen würde. Das wäre ein gelungener RSA Angriff auf die Notstartfunktion, vorbei an jedwedem Schutz gegen RSA, der sich auf die Kernfunktion der hands-free Funktion bezieht.

Nach dem erfindungsgemäßen Verfahren geschieht stattdessen folgendes:
Das Authentifikationselement wechselt - wie bereits beschrieben - in den Transponding/Notstartmodus und empfängt also die sog. challenge, die in diesem Fall von einem Angreifer kommt.

Das Authentifikationselement überprüft aber nun, ob eine Taste am Authentifikationselement gedrückt wird bzw. ist, um sicherzustellen, dass derjenige, der in physikalischem Besitz dieses Authentifikationselements ist, diese Notstartfunktion auch wirklich wünscht.

Da aber keine Taste in diesem Moment gedrückt wird (dazu wäre ja der Besitz des Authentifikationselements notwendig) wird keine gültige response zurückgesendet. Eventuell kann eine falsche response zurückgesendet werden, um den Angreifer zu irritieren und damit dem Fahrzeug mitzuteilen, dass es Indizien für einen RSA Angriff gibt. Der Angriff bleibt im Ergebnis also erfolglos.

### Bezugszeichenliste

- 1: Authentifikationselement
- 2: Transpondingschnittstelle
- 4: Tastereinrichtung
- 6: Signalverarbeitungs- und -weiterleitungseinrichtung
- 10: Vorrichtung
- 12: Steuerungseinrichtung
- 12a: Funktionslogik
- 13: Leseeinrichtung
- 20: Fahrzeug
- 30: Berechtigungssystem

## Patentansprüche

1. Authentifikationselement (1), insbesondere Keyless-Go-Mittel für ein Fahrzeug (20), umfassend:
• eine Transpondingschnittstelle (2) zum Übermitteln eines Authentifikationssignals und zum Empfangen von Energie und Daten, und
• eine Tastereinrichtung (4) zum Erfassen einer Nutzereingabe,
• wobei das Authentifikationselement (1) so ausgebildet ist, dass Authentifikationssignale über die Transpondingschnittstelle (2) übermittelt werden, wenn die Tastereinrichtung (4) eine Nutzereingabe erfasst.

2. Authentifikationselement nach Anspruch 1,
- wobei das Authentifikationselement (1) eine Signalverarbeitungs- und -weiterleitungseinrichtung (6) aufweist,
- wobei vorzugsweise die Signalverarbeitungs- und - weiterleitungseinrichtung (6) mit der Transpondingschnittstelle (2) und mit der Tastereinrichtung (4) verbunden ist,
- wobei vorzugsweise die Signalverarbeitungs- und - weiterleitungseinrichtung (6) die Nutzereingabe der Tastereinrichtung (4) erfasst,
- wobei vorzugsweise im Authentifikationselement (1), insbesondere in der Signalverarbeitungs- und -weiterleitungseinrichtung (6), ein vorbestimmter Referenzwert zum Vergleichen hinterlegt ist,
- wobei vorzugsweise die Signalverarbeitungs- und - weiterleitungseinrichtung (6) Authentifikationssignale über die Transpondingschnittstelle (2) übermittelt,
- wobei vorzugsweise die Authentifikationssignale eine an der Tastereinrichtung (4) erfasste Nutzereingabe umfassen.

3. Authentifikationselement nach Anspruch 1 oder 2,
- wobei die Tastereinrichtung (4) zum Erfassen einer Nutzereingabe ein Bedienelement aufweist, welches vorzugsweise durch Drücken betätigt wird und bevorzugterweise danach in eine Ausgangslage zurückkehrt,
- wobei vorzugsweise die Signalverarbeitungs- und - weiterleitungseinrichtung (6) so ausgebildet ist, dass die erfasste Nutzereingabe mit dem Referenzwert verglichen wird,
- wobei vorzugsweise bei einem positiven Vergleich die Signalverarbeitungs- und -weiterleitungseinrichtung (6) Authentifikationssignale über die Transpondingschnittstelle (2) übermittelt.

4. Berechtigungssystem (30) für Fahrzeuge mit mindestens einem Authentifikationselement (1) nach einem der Ansprüche 1 bis 3 und mit einer Vorrichtung (10),
- wobei die Vorrichtung (10) eine Leseeinrichtung (13) zum Senden von Energie und Daten sowie zum Empfangen von Authentifikationssignalen aufweist,
- wobei die Transpondingschnittstelle (2) des Authentifikationselements (1) an der Leseeinrichtung (13) der Vorrichtung (10) anordenbar ist, um Authentifikationssignale nach dem Empfang von Energie und Daten an die Leseeinrichtung (13) zu übermitteln, und
- wobei vorzugsweise die Vorrichtung (10) so ausgebildet ist, dass nach Empfang von übermittelten Authentifikationssignalen eine Funktion aktiviert wird, insbesondere eine Fahrberechtigung erteilt wird.

5. Berechtigungssystem nach Anspruch 4,
- wobei alternativ zu Anspruch 1 das Authentifikationselement (1) ausgebildet ist, Authentifikationssignale über die Transpondingschnittstelle (2) zu übermitteln, die die Nutzereingabe der Tastereinrichtung (4) umfassen, und
- wobei alternativ zu Anspruch 4 die Vorrichtung (10) ausgebildet ist, die von dem Authentifikationselement (1) übermittelten Authentifikationssignale mit hinterlegten Authentifikationssignalen zu vergleichen und bei positivem Vergleich eine Funktion zu aktivieren.

6. Berechtigungssystem nach Anspruch 4 oder 5,
- wobei die Vorrichtung (10) eine Steuerungseinrichtung (12), insbesondere eine Funktionslogik (12a) zur Verarbeitung von Authentifikationssignalen aufweist, die vorzugsweise mit der Leseeinrichtung (13) verbunden ist,
- wobei vorzugsweise in der Vorrichtung (10), insbesondere in der Funktionslogik (12a), hinterlegte Authentifikationssignale zum Vergleichen hinterlegt sind,
- wobei vorzugsweise die empfangenen und hinterlegten Authentifikationssignale eine von der Tastereinrichtung (4) erfasste Nutzereingabe umfassen,
- wobei vorzugsweise die Funktionslogik (12a) empfangene Authentifikationssignale mit hinterlegten Authentifikationssignalen vergleicht.

7. Verfahren zur Überprüfung einer von einem Nutzer beabsichtigten Autorisierungsanfrage an einem Authentifikationselement (1) eines Fahrzeuges mit einem Berechtigungssystem (30) nach einem der Ansprüche 4 bis 6, wobei das Verfahren nachfolgende Schritte aufweist:
- Anordnen des Authentifikationselements (1) im Sende-und Empfangsbereich der Leseeinrichtung (13) der Vorrichtung (10),
- Empfangen von Energie, wobei die Transpondingschnittstelle (2) des Authentifikationselements (1) Energie von der Leseeinrichtung (13) der Vorrichtung (10) empfängt,
- Erfassen der Nutzereingabe am Authentifikationselement (1) durch die Tastereinrichtung (4),
- Erzeugen von Authentifikationssignalen, welche die erfasste Nutzereingabe umfassen,
- Übermitteln der Authentifikationssignale von dem Authentifikationselement (1) an die Vorrichtung (10), und
- Vergleichen der erfassten Authentifikationssignale mit hinterlegten Authentifikationssignalen.

8. Verfahren nach Anspruch 7,
wobei nachfolgender Schritt alternativ zu den Schritten Erzeugen, Übermitteln und Vergleichen ausgeführt wird:
- im Authentifikationselement (1) Vergleichen der erfassten Nutzereingabe mit einem Referenzwert, wobei bei einem positiven Vergleich ein Übermitteln von Authentifikationssignalen von dem Authentifikationselement (1) an die Vorrichtung (10) initiiert wird.

9. Verfahren nach einem der Ansprüche 7 oder 8,
- wobei das Erfassen der Nutzereingabe ein Erfassen durch die Signalverarbeitungs- und -weiterleitungseinrichtung (6) des Authentifikationselements (1) umfasst,
- wobei vorzugsweise das Erfassen der Nutzereingabe ein Erfassen eines Drückens eines Bedienelements der Tastereinrichtung (4) umfasst,
- wobei vorzugsweise der Referenzwert in der Signalverarbeitungs- und -weiterleitungseinrichtung (6) des Authentifikationselements (1) hinterlegt ist,
- wobei vorzugsweise die hinterlegten Authentifikationssignale in der Funktionslogik (12a) der Vorrichtung (10) hinterlegt sind,
- wobei vorzugsweise bei einem positiven Vergleich die erfasste Nutzereingabe unterhalb oder oberhalb des Referenzwertes liegt oder dem Referenzwert enspricht,
- wobei vorzugsweise bei einem positiven Vergleich die erfassten Authentifikationssignale mit den hinterlegten Authentifikationssignalen übereinstimmen.

10. Verfahren nach einem der Ansprüche 7 bis 9,
- wobei die Funktionslogik (12a) die Authentifikationssignale des Authentifikationselements (1) mit den hinterlegten Authentifikationssignalen der Vorrichtung (10) vergleicht,
- wobei vorzugsweise die Signalverarbeitungs- und - weiterleitungseinrichtung (6) die erfasste Nutzereingabe mit dem hinterlegten Referenzwert vergleicht,
- wobei vorzugsweise die Signalverarbeitungs- und - weiterleitungseinrichtung (6) über eine Funkverbindung von Transpondingschnittstelle (2) und Leseeinrichtung (13) Authentifikationssignale an die Funktionslogik (12a) der Vorrichtung (10) übermittelt,
- wobei vorzugsweise der Schritt des Übermittelns der Authentifikationssignale eine Verschlüsselung und/oder Komprimierung der Authentifikationssignale umfasst.

## Claims

1. Authentication element (1), in particular a Keyless Go means for a vehicle (20), comprising:
• a transponding interface (2) for transmitting an authentication signal and for receiving energy and data, and
• a button device (4) for capturing a user input,
• wherein the authentication element (1) is designed in such a manner that authentication signals are transmitted via the transponding interface (2) if the button device (4) captures a user input.

2. Authentication element according to Claim 1,
- wherein the authentication element (1) has a signal processing and forwarding device (6),
- wherein the signal processing and forwarding device (6) is preferably connected to the transponding interface (2) and to the button device (4),
- wherein the signal processing and forwarding device (6) preferably captures the user input of the button device (4),
- wherein a predetermined reference value is preferably stored for comparison in the authentication element (1), in particular in the signal processing and forwarding device (6),
- wherein the signal processing and forwarding device (6) preferably transmits authentication signals via the transponding interface (2),
- wherein the authentication signals preferably comprise a user input captured at the button device (4).

3. Authentication element according to Claim 1 or 2,
- wherein the button device (4) has, for capturing a user input, an operating element which is preferably actuated by pressing and preferably then returns to a starting position,
- wherein the signal processing and forwarding device (6) is preferably designed in such a manner that the captured user input is compared with the reference value,
- wherein the signal processing and forwarding device (6) preferably transmits authentication signals via the transponding interface (2) in the case of a positive comparison.

4. Authorization system (30) for vehicles, having at least one authentication element (1) according to one of Claims 1 to 3 and having an apparatus (10),
- wherein the apparatus (10) has a reading device (13) for transmitting energy and data and for receiving authentication signals,
- wherein the transponding interface (2) of the authentication element (1) can be arranged on the reading device (13) of the apparatus (10) in order to transmit authentication signals to the reading device (13) after receiving energy and data, and
- wherein the apparatus (10) is preferably designed in such a manner that, after receiving transmitted authentication signals, a function is activated, in particular a driving authorization is granted.

5. Authorization system according to Claim 4,
- wherein, as an alternative to Claim 1, the authentication element (1) is designed to transmit authentication signals via the transponding interface (2), which signals comprise the user input of the button device (4), and
- wherein, as an alternative to Claim 4, the apparatus (10) is designed to compare the authentication signals transmitted by the authentication element (1) with stored authentication signals and to activate a function in the case of a positive comparison.

6. Authorization system according to Claim 4 or 5,
- wherein the apparatus (10) has a control device (12), in particular a functional logic unit (12a) for processing authentication signals, which is preferably connected to the reading device (13),
- wherein authentication signals stored in the apparatus (10), in particular in the functional logic unit (12a), are preferably stored for comparison,
- wherein the received and stored authentication signals preferably comprise a user input captured by the button device (4),
- wherein the functional logic unit (12a) preferably compares received authentication signals with stored authentication signals.

7. Method for checking an authorization request intended by a user at an authentication element (1) of a vehicle having an authorization system (30) according to one of Claims 4 to 6, wherein the method has the following steps of:
- arranging the authentication element (1) in the transmitting and receiving range of the reading device (13) of the apparatus (10),
- receiving energy, wherein the transponding interface (2) of the authentication element (1) receives energy from the reading device (13) of the apparatus (10),
- capturing the user input at the authentication element (1) by means of the button device (4),
- generating authentication signals which comprise the captured user input,
- transmitting the authentication signals from the authentication element (1) to the apparatus (10), and
- comparing the captured authentication signals with stored authentication signals.

8. Method according to Claim 7,
wherein the following step is carried out as an alternative to the generating,
transmitting and comparing steps:
- comparing the captured user input with a reference value in the authentication element (1), wherein transmission of authentication signals from the authentication element (1) to the apparatus (10) is initiated in the case of a positive comparison.

9. Method according to either of Claims 7 and 8,
- wherein the capture of the user input comprises capture by means of the signal processing and forwarding device (6) of the authentication element (1),
- wherein the capture of the user input preferably comprises capture of pressing of an operating element of the button device (4),
- wherein the reference value is preferably stored in the signal processing and forwarding device (6) of the authentication element (1),
- wherein the stored authentication signals are preferably stored in the functional logic unit (12a) of the apparatus (10),
- wherein the captured user input is preferably below or above the reference value or corresponds to the reference value in the case of a positive comparison,
- wherein the captured authentication signals preferably correspond to the stored authentication signals in the case of a positive comparison.

10. Method according to one of Claims 7 to 9,
- wherein the functional logic unit (12a) compares the authentication signals from the authentication element (1) with the stored authentication signals from the apparatus (10),
- wherein the signal processing and forwarding device (6) preferably compares the captured user input with the stored reference value,
- wherein the signal processing and forwarding device (6) preferably transmits authentication signals to the functional logic unit (12a) of the apparatus (10) via a radio connection of the transponding interface (2) and the reading device (13),
- wherein the step of transmitting the authentication signals preferably comprises encryption and/or compression of the authentication signals.

## Revendications

1. Élément d'authentification (1), en particulier un moyen de démarrage sans clé de type Keyless-Go pour un véhicule (20), comprenant :
• une interface de transpondeur (2) pour transmettre un signal d'authentification et pour recevoir de l'énergie et des données, et
• un dispositif à touches (4) pour détecter une entrée d'un utilisateur,
• dans lequel l'élément d'authentification (1) est réalisé de telle sorte que des signaux d'authentification soient transmis par le biais de l'interface de transpondeur (2), lorsque le dispositif à touches (4) détecte une entrée de l'utilisateur.

2. Élément d'authentification selon la revendication 1,
- dans lequel l'élément d'authentification (1) présente un dispositif de traitement et de transfert de signaux (6),
- dans lequel, de préférence, le dispositif de traitement et de transfert de signaux (6) est relié à l'interface de transpondeur (2) et au dispositif à touches (4),
- dans lequel, de préférence, le dispositif de traitement et de transfert de signaux (6) détecte l'entrée de l'utilisateur du dispositif à touches (4),
- dans lequel, de préférence, une valeur de référence prédéterminée est enregistrée à des fins de comparaison dans l'élément d'authentification (1), en particulier dans le dispositif de traitement et de transfert de signaux (6),
- dans lequel, de préférence, le dispositif de traitement et de transfert de signaux (6) transmet des signaux d'authentification par le biais de l'interface de transpondeur (2),
- dans lequel, de préférence, les signaux d'authentification comprennent une entrée d'utilisateur détectée au niveau du dispositif à touches (4).

3. Élément d'authentification selon la revendication 1 ou 2,
- dans lequel le dispositif à touches (4) présente, pour détecter une entrée d'un utilisateur, un élément de commande qui est de préférence actionné par pression et revient ensuite de préférence dans une position initiale,
- dans lequel, de préférence, le dispositif de traitement et de transfert de signaux (6) est réalisé de telle sorte que l'entrée d'utilisateur détectée soit comparée avec la valeur de référence,
- dans lequel, de préférence, en cas de comparaison positive, le dispositif de traitement et de transfert de signaux (6) transmet des signaux d'authentification par le biais de l'interface de transpondeur (2).

4. Système d'autorisation (30) pour des véhicules comprenant au moins un élément d'authentification (1) selon l'une quelconque des revendications 1 à 3 et comprenant un dispositif (10),
- dans lequel le dispositif (10) présente un dispositif de lecture (13) pour envoyer de l'énergie et des données ainsi que pour recevoir des signaux d'authentification,
- dans lequel l'interface de transpondeur (2) de l'élément d'authentification (1) peut être disposée au niveau du dispositif de lecture (13) du dispositif (10), afin de transmettre des signaux d'authentification au dispositif de lecture (13) après la réception d'énergie et de données, et
- dans lequel, de préférence, le dispositif (10) est réalisé de telle sorte qu'après la réception de signaux d'authentification transmis, une fonction soit activée, en particulier une autorisation de conduite soit délivrée.

5. Système d'autorisation selon la revendication 4,
- dans lequel, en variante de la revendication 1, l'élément d'authentification (1) est réalisé pour transmettre des signaux d'authentification par le biais de l'interface de transpondeur (2), lesquels comprennent l'entrée de l'utilisateur du dispositif à touches (4), et
- dans lequel, en variante de la revendication 4, le dispositif (10) est réalisé pour comparer les signaux d'authentification transmis par l'élément d'authentification (1) avec des signaux d'authentification enregistrés et, en cas de comparaison positive, pour activer une fonction.

6. Système d'autorisation selon la revendication 4 ou 5,
- dans lequel le dispositif (10) présente un dispositif de commande (12), en particulier une logique de fonction (12a) pour traiter des signaux d'authentification, lequel est de préférence relié au dispositif de lecture (13),
- dans lequel, de préférence, des signaux d'authentification enregistrés dans le dispositif (10), en particulier dans la logique de fonction (12a), sont enregistrés à des fins de comparaison,
- dans lequel, de préférence, les signaux d'authentification reçus et enregistrés comprennent une entrée d'utilisateur détectée par le dispositif à touches (4),
- dans lequel, de préférence, la logique de fonction (12a) compare des signaux d'authentification reçus avec des signaux d'authentification enregistrés.

7. Procédé pour contrôler une demande d'autorisation provenant d'un utilisateur à un élément d'authentification (1) d'un véhicule comprenant un système d'autorisation (30) selon l'une quelconque des revendications 4 à 6, dans lequel le procédé présente les étapes suivantes :
- agencement de l'élément d'authentification (1) dans la plage d'émission et de réception du dispositif de lecture (13) du dispositif (10),
- réception d'énergie, dans lequel l'interface de transpondeur (2) de l'élément d'authentification (1) reçoit de l'énergie du dispositif de lecture (13) du dispositif (10),
- détection de l'entrée de l'utilisateur au niveau de l'élément d'authentification (1) par le dispositif à touches (4),
- génération de signaux d'authentification qui comprennent l'entrée d'utilisateur détectée,
- transmission des signaux d'authentification de l'élément d'authentification (1) au dispositif (10), et
- comparaison des signaux d'authentification détectés avec des signaux d'authentification enregistrés.

8. Procédé selon la revendication 7,
dans lequel l'étape suivante est mise en œuvre en variante des étapes de génération, de transmission et comparaison :
- dans l'élément d'authentification (1), comparaison de l'entrée d'utilisateur détectée avec une valeur de référence,
dans lequel, en cas de comparaison positive, une transmission de signaux d'authentification par l'élément d'authentification (1) au dispositif (10) est amorcée.

9. Procédé selon l'une quelconque des revendications 7 et 8,
- dans lequel la détection de l'entrée de l'utilisateur comprend une détection par le dispositif de traitement et de transfert de signaux (6) de l'élément d'authentification (1),
- dans lequel, de préférence, la détection de l'entrée de l'utilisateur comprend une détection d'une pression d'un élément de commande du dispositif à touches (4),
- dans lequel, de préférence, la valeur de référence est enregistrée dans le dispositif de traitement et de transfert de signaux (6) de l'élément d'authentification (1),
- dans lequel, de préférence, les signaux d'authentification enregistrés sont enregistrés dans la logique de fonction (12a) du dispositif (10),
- dans lequel, de préférence, en cas de comparaison positive, l'entrée d'utilisateur détectée est inférieure ou supérieure à la valeur de référence ou correspond à la valeur de référence,
- dans lequel, de préférence, en cas de comparaison positive, les signaux d'authentification détectés coïncident avec les signaux d'authentification enregistrés.

10. Procédé selon l'une quelconque des revendications 7 à 9,
- dans lequel la logique de fonction (12a) compare les signaux d'authentification de l'élément d'authentification (1) avec les signaux d'authentification enregistrés du dispositif (10),
- dans lequel, de préférence, le dispositif de traitement et de transfert de signaux (6) compare l'entrée d'utilisateur détectée avec la valeur de référence enregistrée,
- dans lequel, de préférence, le dispositif de traitement et de transfert de signaux (6) transmet, par le biais d'une liaison radio depuis l'interface de transpondeur (2) et le dispositif de lecture (13), des signaux d'authentification à la logique de fonction (12a) du dispositif (10),
- dans lequel, de préférence, l'étape de transmission des signaux d'authentification comprend un cryptage et/ou une compression des signaux d'authentification.
